# EUROPÄISCHE PATENTANMELDUNG

(11) **EP 1 111 925 A2**
(43) Veröffentlichungstag der Anmeldung: **27.06.2001**
(21) Anmeldenummer: 00127026.3
(22) Anmeldetag: 09.12.2000
(51) Int. Cl.: H04N 7/173

(54) **System und Verfahren zum Bereitstellen von durch Anwender angeforderten Daten, insbesondere Audio- und/oder Videodaten**

(30) Priorität: 24.12.1999 DE 19963045
(71) Anmelder: Prodac Media AG, 50858 Köln (DE); Axcent Gesellschaft für betriebswirtschaftliche Lösungen mbH, 33100 Paderborn (DE)
(72) Erfinder: Fleu, Thomas, 52134 Herzogenrath (DE); Krebs, Günter, 51467 Bergisch Gladbach (DE); Lüling, Reinhard, Dr., 33102 Paderborn (DE); Morisse, Karsten, Dr., 33824 Werther (DE)
(74) Vertreter: Sternagel, Fleischer, Godemeyer & Partner Patentanwälte

(57) **Zusammenfassung**

Bei einem System zum Bereitstellen von durch Anwender angeforderten Daten, insbesondere Audio- und/oder Videodaten (2), an einer Mehrzahl von Einzelstellen unter Nutzung multimedialer Komponenten, wobei eine Mehrzahl von Anwenderendgeräten (5) an den Einzelstellen, Mittel (3, 31, 32, 34) zum Modulieren von Daten, zumindest eine Kopfstelle (9) und Datenleitungen (61, 62, 63, 64, 65) bzw. ein Datenleitungsnetz (60), die das die einzelnen Komponenten des Systems miteinander verbindend, vorgesehen sind, ist zumindest eine Einrichtung (81) zum Dekodieren von digitalen Audio- und/oder Videodaten (2) vorgesehen, die in eine digitale Servereinrichtung (1,71) und/oder die Anwenderendgeräte (5) integriert ist, wobei die digitale Servereinrichtung die digitalen Audio- und/oder Videodaten (2) liefert, bereitstellt und überträgt. Bei einem Verfahren zum Bereitstellen von Daten, insbesondere Audio- und/oder Videodaten (2) an einer Mehrzahl von Einzelstellen unter Verwendung des Systems werden die Daten, insbesondere Audio- und/oder Videodaten (2) als digitalisierte breitbandige Daten von der zumindest einen digital arbeitenden Komponente des Systems verwaltet und bereitgestellt.

## Beschreibung

Die Erfindung betrifft ein System zum Bereitstellen von durch Anwender angeforderten Daten, insbesondere Audio- und/oder Videodaten, an einer Mehrzahl von Einzelstellen unter Nutzung multimedialer Komponenten, wobei eine Mehrzahl von Anwenderendgeräten an den Einzelstellen, Mittel zum Modulieren von Daten, zumindest eine Kopfstelle und Datenleitungen bzw. ein Datenleitungsnetz (60), die einzelnen Komponenten des Systems miteinander verbindend, vorgesehen sind, sowie Verfahren zum Bereitstellen von Audio- und/oder Videodaten an einer Mehrzahl von Einzelstellen unter Verwendung des Systems.

Systeme zum Bereitstellen von durch Anwender angeforderten Audio- und/oder Videodaten sind bekannt, basierend auf analoger Technologie. Derartige Systeme werden in Hotels oder Appartementanlagen eingesetzt, wobei eine Mehrzahl von TV-Geräten an verschiedenen Orten bzw. Einzelstellen bei den Anwendern vorgesehen sind, z.B. Hotelgästen. Üblicherweise werden außer der Möglichkeit, Videofilme abzurufen und Sender auszuwählen, insbesondere lediglich aus einer kleinen vom Hotel eingestellten Auswahl, den Anwendern Zusatzdienste angeboten und übermittelt. Diese bestehen in der Begrüßung im Hotelzimmer mit persönlichen Mitteilungen und/oder neuesten Hotelnachrichten, insbesondere auch Mitteilungen über die aktuellen Freizeitaktivitäten, die im Hotel oder von diesem angeboten werden.

Ein solches System ist aus der WO 98/36581 in Form eines interaktiven Audio/Video-Verbreitungssystems bekannt. Dabei werden Programme und Dienstleistungen von einer Kopfstelle über das Verbreitungsnetzwerk den einzelnen Appartements zugeführt. Des weiteren ist ein interaktives Menü auf dem Bildschirm der einzelnen Anwenderendgeräte abrufbar, das in der Kopfstelle des Systems generiert wird. Sobald ein Anwender eine Auswahl auf dem Menü trifft, werden in der Kopfstelle des Systems die entsprechenden Aktionen ausgeführt. Der Anwender kann dann beispielsweise einen Videofilm anfordern, sofern dieser Videofilm noch verfügbar und ein freier analoger Übertragungskanal vorhanden ist, auf dem der Videofilm abgespielt werden kann. Dasselbe gilt für Videospiele. Sofern der angeforderte Videofilm bereits auf einem anderen Anwenderkanal gespielt wird, informiert das System den anfordernden Anwender davon über das interaktive Menü und weist ihn darauf hin, daß er sich auf dem anderen Anwenderkanal diesem Film zuschalten kann. Da eine endliche Anzahl von Videoabspielgeräten vorgesehen ist, wird der anfordernde Anwender darüber informiert, falls alle Videoabspielgeräte belegt sind. Er erhält ebenfalls eine Nachricht, sofern das System vorübergehend für ihn nicht tätig werden kann, da z.B. der angeforderte Film, das angeforderte Spiel oder die abgerufene Dienstleistung derzeit nicht verfügbar sind,. das System vollständig ausgelastet ist und keine Kapazitäten für weitere Dienstleistungen offen hat.

Der Erfindung liegt die Aufgabe zugrunde, ein System und ein Verfahren zum Bereitstellen von durch Anwender angeforderten Daten, insbesondere Audio-und/oder Videodaten an einer Mehrzahl Einzelstellen zu schaffen, das die Nachteile des Standes der Technik vermeidet und eine größere Flexibilität und geringeren Materialaufwand aufweist als die bekannten Systeme.

Die Aufgabe wird durch ein System nach dem Oberbegriff des Anspruchs 1 dadurch gelöst, daß zumindest eine Einrichtung zum Dekodieren von digitalen Audio- und/oder Videodaten, die in eine digitale Servereinrichtung und/oder die Anwenderendgeräte integriert ist, wobei die digitale Servereinrichtung die digitalen Audio- und/oder Videodaten liefert, bereitstellt und überträgt. Die Aufgabe wird durch ein Verfahren zum Bereitstellen von Daten, insbesondere Audio- und/oder Videodaten an einer Mehrzahl von Einzelstellen unter Verwendung des Systems dadurch gelöst, daß die Daten, insbesondere Audio- und/oder Videodaten, als digitalisierte breitbandige Daten von der zumindest einen digital arbeitenden Komponente des Systems verwaltet und bereitgestellt werden. Weiterbildungen der Erfindung sind in den abhängigen Ansprüchen definiert.

Dadurch wird ein System zum Bereitstellen von durch Anwender angeforderten Audio- und/oder Videodaten an einer Mehrzahl von Einzelstellen geschaffen, bei dem durch die Nutzung von digitalen Komponenten und digitalen Übertragungen nicht nur eine schnellere Bearbeitung der angeforderten Dienstleistungen, sondern auch eine größere Vielfalt von diesen sowie eine Einsparung von Materialkosten für die erforderlichen Komponenten des Systems ermöglicht werden. Dies führt zu einer gesteigerten Auslastbarkeit des Systems, da auch neue Dienstleitungen angeboten werden können, die auf analogen Systemen nicht realisierbar sind, wie echtes "Video on Demand" oder die Kombination mit Werbung.

Ein weitere Vorteil der Verwendung von digitalen Daten und Komponenten ist die höhere und im wesentlichen gleichbleibende Qualität der aufgezeichneten Filme, insbesondere im Vergleich zu den heute bekannten analogen Aufzeichnungen.

Bevorzugt ist die die Audio- und/oder Videodaten liefernde Komponente des Systems eine digitale Servereinrichtung, die Audio- und/oder Videodaten an das Mittel zum Modulieren abgibt. Diese ersetzt in Form eines digitalen Medienservers die bekannten sonst vorgesehenen Videoabspielgeräte. Besonders bevorzugt ist die digitale Servereinheit ein digitaler Medienserver und/oder ein digitaler Spieleserver, wobei vorzugsweise zumindest eine Komponente des Systems durch den Anwender interaktiv betätigbar bzw. beeinflußbar ist. Insbesondere ist eine jederzeitige Anforderung von Filmen, Spielen etc. trotz der bereits bei einer Mehrzahl von weiteren Anwendern laufenden weiteren Filme, Spiele etc. möglich, da alle Dienstleistungen auf digitaler Basis zur Verfügung gestellt werden. Dieselben Informationen und Dienste können also gleichzeitig mehrfach genutzt und abgerufen werden. Bei Verwendung analoger Geräte ist dies nicht möglich. Vorzugsweise gibt die digitale Servereinrichtung die Audio- und/oder Videodaten in komprimierter Form ab. Dadurch ist eine schnellere Übermittlung der Daten möglich, wodurch auch die Zugriffszeiten auf die Daten vorteilhaft verringert werden können.

Vorzugsweise sind die Einrichtungen zum Dekodieren von digitalen Audio-und/oder Videodaten auch zur Weitergabe der dekodierten Daten an die Anwenderendgeräte und zur Darstellung interaktiver Anwendungen auf den Anwenderendgeräten vorgesehen. Diese ersetzen die bei der analogen Technik vorgesehenen Rechner oder Personal Computer (PC), die zur Bearbeitung der Dienstleistungen für jeden einzelnen Anwender ansonsten erforderlich sind. Durch Vorsehen dieser Einrichtungen zum Ersatz für die zahlreichen einzelnen Rechner wird vorteilhaft der Materialaufwand und Platzbedarf verringert, da sie sehr viel kleiner sind als die sonst eingesetzten bzw. verwendeten PCs. Vorzugsweise sind die Einrichtungen interaktiv durch die Anwender beeinflußbar, wodurch eine echte Kommunikation zwischen dem System und dem Anwender geführt werden kann, wodurch es für den Anwender möglich ist, optimal nach seinem persönlichen Zeitund Interessenschwerpunkten und -vorgaben die ihn interessierenden Medieninhalte auszusuchen. Dadurch kann bei dem erfindungsgemäßen ein sehr hoher Grad an Interaktionsmöglichkeit geschaffen werden.

Besonders bevorzugt sind die Einrichtungen zum Decodieren als interaktive Decoderbaugruppen in die Anwenderendgeräte integriert. Dadurch wird der Materialaufwand weiter verringert. Die Einrichtungen können beispielsweise in Form von zusätzlichen über Steckverbindungen mit den Anwenderendgeräten verbindbaren Elementen, Steckkarten oder im Chip-Format vorgesehen sein. Der Vorteil von Steckkarten oder Chips liegt in der kompakteren Bauform sowie dem sichereren Aufbewahrungsort in dem jeweiligen Anwenderendgerät.

Das erfindungsgemäße System ist aufgrund der Verwendung von im wesentlichen ausschließlich digitalen Komponenten übersichtlicher, also weniger komplex, weniger platz- und kostenintensiv und besser realisierbar. Zwar ist die Software des Systems aufwendiger als bei den bekannten analogen Systemen, jedoch wird das erfindungsgemäße System lediglich einmal aufgebaut und an seinen Aufstellungsort angepaßt. Anschließend ist es startbereit und kann ohne weitere Einstellungen oder ständige Wartung wie sonst bei bekannten Systemen mit analogen Videoabspielgeräten problemlos betrieben werden.

Ein weiterer Vorteil der Verwendung von digitalen Daten ist die einfachere Verbreitung der Daten an die Einzelstellen, insbesondere unter Verwendung eines Netzwerks. Dabei kann ein auf Internetdaten und/oder Satellitenkommunikation basierendes Verwaltungsprogramm die einzelnen Komponenten des Systems sowie die Versorgung des Systems mit den angeforderten Medieninhalten überwachen. Vorteilhaft ist dadurch kein fehleranfälliger und teurer manueller Wechsel von Videokassetten mehr erforderlich.

Außerdem lassen sich digitale Daten sehr gut mit anderen Medieninhalten kombinieren und können in diese integriert werden. Bevorzugt ist daher der digitalen Servereinrichtung eine geeignete Komponente bzw. ein daran angepaßtes Mittel zum Modulieren der digitalen Daten zugeordnet. Baugruppen, die Audio- und Videosignale umschalten, wie dies bei analogen Systemen üblich ist, entfallen dadurch vorteilhaft. Die von der Servereinrichtung stammenden modulierten Daten können vorzugsweise direkt an die einzelnen Anwenderendgeräte weitergegeben werden.

Bevorzugt ist des weiteren eine Einrichtung zum Übermitteln der digitalisierten Daten an das System unter Nutzung von Satellitensystemen und/oder eine Einrichtung zum Kontrollieren der Servereinrichtung über das Internet und/oder Satellitenkommunikation und/oder andere Netzwerkstrukturen vorgesehen. Die Einrichtungen können an einer zentralen Stelle vorgesehen werden, die entfernt von dem eigentlichen Nutzungsort des Systems liegt. Beispielsweise kann eine Betreiberfirma die Systeme über Satellitenkommunikation ständig mit den aktuellen Medieninhalten versorgen. Bislang ist es erforderlich, daß derartige Inhalte entweder von dem jeweiligen Systemnutzer vor Ort in das analoge System eingegeben werden und/oder Videokassetten per Post an die jeweiligen einzelnen Systemnutzer, z.B. Hotels, versandt werden. Da zumindest die Servereinrichtung über das System bevorzugt mit dem Internet verbunden ist, kann auf diesem Wege, über Satellitenkommunikation oder vermittels anderer Netzwerkstrukturen durch die Betreiberfirma die Wartung und Kontrolle des Systems vorteilhaft zentral aus der Ferne erfolgen. Hierdurch kann von einem zentralen Ort aus eine weitflächige Versorgung, Wartung und Kontrolle des Systems, beispielsweise problemlos und schnell auch zu den entferntesten Orten im Ausland hin, erfolgen. Es entfällt dadurch ein persönliches zeit- und kostenintensives Aufsuchen der einzelnen Systemnutzer, um eine Versorgung, Wartung und Kontrolle des Systems vorzunehmen.

Über das bevorzugt vorgesehene Netzwerk zur Datenleitung werden insbesondere Daten wie Fernsehsignale und/oder Audio- und/oder Videosignale und/oder Signale von Zusatzdienstleistungen wie Informationssystemen geleitet. Hierbei ist vorteilhaft zum Schaffen einer Interaktivität für die Anwender eine auf digitalen Daten basierende Benutzeroberfläche vorgesehen, insbesondere eine integrierte Benutzeroberfläche, die Audio- und/oder Video- und textuelle Informationen enthält.

Vorteilhaft können mit dem System digitalisierte breitbandige audiovisuelle Medieninhalte verwaltet, archiviert und an die einzelnen Anwender auf Nachfrage ausgegeben werden. Dadurch ist es möglich, beliebig vielen Anwendern parallel diejenigen Daten zur Verfügung zu stellen, die von diesen gerade aktuell angefordert werden. Dabei können verschiedene Anwender ein und dieselbe Dienstleistung auch zeitversetzt anfordern. Jeder Anwender erhält die Dienstleistung dann ohne Informationsverlust und ungekürzt zu der Zeit bereitgestellt, zu der er sie anfordert.

Besonders vorteilhaft ist eine Einrichtung zum gleichzeitigen Aufzeichnen und zeitversetzten Abspielen der Audio- und/oder Videodaten vorgesehen. Der Anwender hat dadurch die Möglichkeit, einen Film, den er aktuell im Fernsehgerät empfängt, aufzeichnen zu lassen, wenn er vorübergehend der Übertragung nicht folgen kann, den Film jedoch nach einer kurzen Unterbrechung noch bis zum Ende ansehen möchte. Das System zeichnet den Rest des Filmes auf. Der Anwender kann sich nach der kurzen Unterbrechung während der noch laufenden Aufzeichnung des Films diesen lediglich zeitversetzt, jedoch ohne Informationsverlust und ohne das Ende der Aufzeichnung abwarten zu müssen, bis zum Ende ansehen.

Wie auch bei analog arbeitenden Videoaufzeichnungsgeräten kann der Anwender jederzeit einen Videofilm oder eine Videoaufzeichnung starten, den Film vorübergehend anhalten und anschließend auf Abruf den aufgezeichneten Film an genau der Stelle weiter sehen, an der er ihn angehalten hat. Vorteilhaft gegenüber dem analogen Stand der Technik ist jedoch, daß der Anwender einen Film auch bei bereits laufender Wiedergabe für einen anderen Anwender vom Beginn an ansehen kann, ohne mit diesem zu kollidieren oder sich dabei lediglich zuschalten zu können. Dies ist mit den Systemen des Standes der Technik nicht möglich, da diese einen Film dann starten, wenn er von dem ersten Anwender abgerufen wird. Ein weiterer Anwender kann sich zwar anschließend dem Film zuschalten, jedoch kann er lediglich den Teil des Filmes sehen, den gerade auch der erste Anwender empfängt. Es ist ihm also nicht möglich, sich den Film vom Beginn an anzusehen, was mit dem erfindungsgemäßen System vorteilhaft jederzeit möglich ist.

Außerdem können eine Reihe weiterer Dienstleistungen insbesondere im Hotelbereich von dem System bereitgestellt werden, die erst aufgrund der Verwendung digitaler Technologie ermöglicht werden und mit analoger Technik nicht durchführbar sind. Beispiele hierfür sind die Verwendung von Anwender- und/oder Nutzerprofilen für die Auswahl der angebotenen Dienstleistungen oder das parallele Bereitstellen von gleichen Dienstleistungen zeitgleich an verschiedene Anwender. Die Vorteile digitaler Technologie können also insbesondere für die Zwecke der Unterhaltungs- und Informationssysteme in Hotels genutzt werden.

Vorteilhaft werden die aufgezeichneten Audio- und/oder Videodaten mit Daten von Werbeeinspielungen anwenderprofilorientiert kombiniert. Dies kann zur anderweitigen Finanzierung des Systems bei der Verwendung in Hotels genutzt werden, wobei die Werbeeinspielungen durch die Betreiberfirmen oder bei entsprechender Programmierung durch die Systeme selbst an beliebigen Stellen in Filme und Informationssendungen integriert werden können. Vorzugsweise weist der Medienserver eine Einrichtung zum Speichern und Verknüpfen von Anwender- und/oder Nutzerprofilen auf, wobei die Einrichtung selbständig und/oder durch Betätigung Verknüpfungen von Anwender- und/oder Nutzerprofil und ausgestrahlten Medieninhalten oder anderweitigen Daten vornimmt.

Vorteilhaft selektiert das erfindungsgemäße System vermittels eines eingegebenen Datenprofils, insbesondere Anwender- oder Nutzerprofils, selbständig über audiovisuelle Medien, wie Rundfunk- oder Fernsehanstalten, und/oder im Internet ausgestrahlte Audio- und/oder Videodaten, zeichnet diese auf und stellt sie zum insbesondere zeitversetzten Abspielen den Anwendern zur Verfügung. Vorzugsweise wird von beispielsweise einem Hotelgast als Anwender des Systems ein Anwenderprofil erstellt, das dessen bevorzugte Medieninhalte enthält. Das Anwenderprofil wird nachfolgend von dem System mit den Daten von Fernsehsendungen, Spielen, Intemetinhalten und/oder weiteren Zusatzdienstleistungen verglichen. Vorzugsweise kommen diese Daten (Metadaten) aus elektronischen Programmzeitschriften (EPG - Electronic Programm Guide) oder aus dem Internet. Sobald die genannten Daten mit dem Anwenderprofil übereinstimmen, zeichnet das System die jeweiligen Medieninhalte vorzugsweise selbständig auf und stellt diese persönliche Medienauswahl dem Anwender zur Verfügung. Die Medieninhalte können dabei auch Aufzeichnungen beinhalten, für die der Anwender eine Gebühr entrichten muß, wie beim bekannten Pay-TV. Eine solche Programmauswahl kann andererseits auch durch den Systemnutzer (z.B. Hotel) vorgegeben werden, wodurch sie als nutzerprofilorientiert bezeichnet wird. Sie kann u.a. Nachrichten, Reportagen, aber auch Unterhaltungssendungen und Kinderprogramme umfassen.

Das System kann vorteilhaft internationale Standards auf dem Medienbereich nutzen, wodurch eine sehr gute Kompatibilität mit unterschiedlichsten Zusatzkomponenten möglich ist und das System kostengünstig aufgebaut werden kann. Beispielsweise kann auf diese Weise das Internet besonders leicht und effektiv mit dem System verknüpft werden. Damit wird eine Anbindungsmöglichkeit an Internet-Technologien geschaffen, wie z.B. IP-Telefonie, E-Commerce etc. Um einen ortsunabhängigen Zugang zum Internet zu schaffen, sind vorzugsweise Anwenderendgeräte wie Mobiltelefone, TV-Geräte oder dergleichen vorgesehen.

Ein weiterer besonderer Vorteil des erfindungsgemäßen Systems ist sein modularer Aufbau, wodurch eine stufenlose Weiterentwicklung der bestehenden Systeme in Richtung auf das erfindungsgemäße System problemlos möglich ist. Dabei werden nacheinander einzelne Module des Systems in dieses integriert, wobei zunächst die wichtigsten Komponenten des Systems digitalisiert werden. Durch die besondere Ausgestaltung des Systems ist es möglich, dieses jederzeit lauffähig zu erhalten, trotz des eventuell nacheinander erfolgenden Übergangs von der analogen Technologie zur digitalen.

Bevorzugt wird das erfindungsgemäße System für Hotels oder Appartementanlagen verwendet. Es kann aber auch für Privathaushalte in größeren Wohnkomplexen vorteilhaft Anwendung finden, da es auch dort eine Nachfrage nach speziellen auf den Wohnkomplex, die Wohngegend oder den Wohnort selbst bezogenen Programme und Informationen geben kann.

Zur näheren Erläuterung der Erfindung werden im folgenden Ausführungsbeispiele anhand der Zeichnungen beschrieben. Diese zeigen in:
- Fig.1: eine Prinzipskizze einer ersten Ausführungsform eines erfindungsgemäßen digitalen Systems mit einem digitalen Medienserver,
- Fig.2: eine Prinzipskizze einer zweiten Ausführungsform eines erfindungsgemäßen digitalen Systems mit einem digitalen Medienserver gemäß Fig.2 und einem digitalen Spieleserver,
- Fig.3: eine Prinzipskizze einer dritten Ausführungsform eines erfindungsgemäßen digitalen Systems mit interaktiven Einrichtungen zum Dekodieren, Weitergeben und Darstellen von digitalen Audio- und/oder Videodaten in Form von interaktiven Decoderbaugruppen,
- Fig.4: eine Prinzipskizze einer vierten Ausführungsform eines erfindungsgemäßen digitalen Systems mit in Anwenderendgeräten integrierten interaktiven Einrichtungen gemäß Fig.3 und
- Fig.5: eine Prinzipskizze eines bekannten analogen Systems mit analogen Einzelkomponenten.

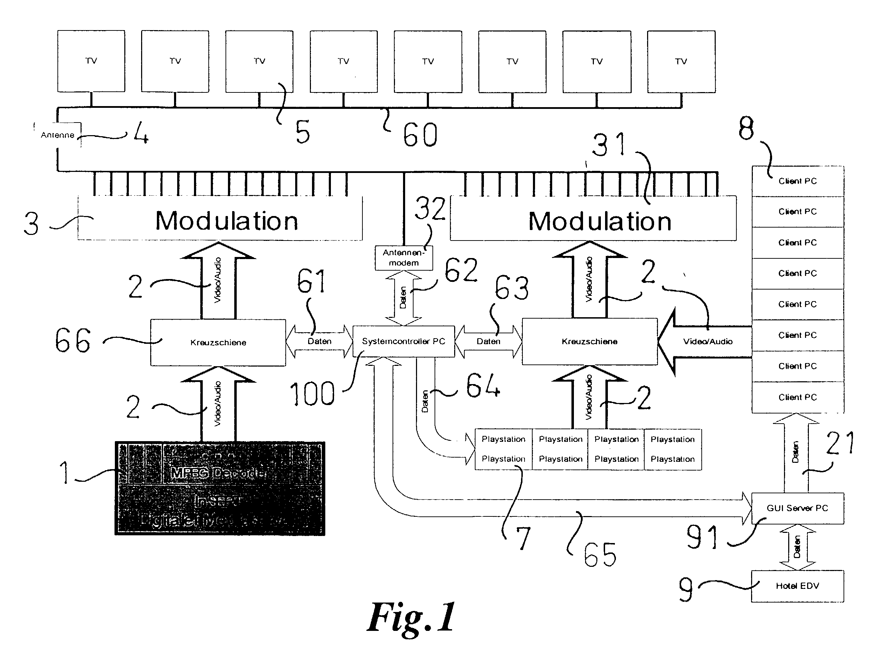

In Fig.1 ist eine Prinzipskizze des Aufbaus eines erfindungsgemäßen Systems dargestellt. Das System weist einen digitalen Medienserver 1 auf. Dieser sendet Audio- und/oder Videodaten 2 an einen Modulator 3, der diese Daten moduliert und an eine Antenne 4 überträgt. Die Antenne 4 ist mit einer Mehrzahl von Anwenderendgeräten 5 in Form von TV-Geräten verbunden. Dargestellt sind acht TV-Geräte, wobei die Anzahl der TV-Geräte beliebig gewählt werden kann. Jedes dieser TV-Geräte ist an einer Einzelstelle bei einem Anwender vorgesehen, beispielsweise in einem Hotelzimmer oder Appartement. Alle Geräte sind miteinander über ein Datenleitungsnetz 60 an die gemeinsame Antenne 4 verbunden. Die Datenkommunikation erfolgt im wesentlichen ausschließlich über dieses Medium.

Die Audio- und/oder Videodaten 2 können nicht nur von dem Medienserver 1 stammen, sondern auch von Spielestationen 7, auf denen eine Anzahl von Spielen gespeichert ist. Diese Daten werden über einen weiteren Modulator 31 ebenfalls an die Antenne 4 übertragen, die diese Daten an die TV-Geräte 5 weitergibt. Audio- und/oder Videodaten 2 werden auch von einzelnen Rechnern 8 ausgegeben, die es jedem der Anwender ermöglichen, von seinem Hotelzimmer über das dort aufgestellte TV-Gerät 5 auf das System zuzugreifen. Von den Rechnern 8 wird jede der Handlungen, die der jeweilige Anwender vornimmt, jedes Anfordern von Informationen, Videofilmen, Spielen etc. gesteuert. Die einzelnen Rechner 8 werden von einem Serversystem oder einer Servereinheit 91 mit Daten 21 versorgt, die beispielsweise von einer Hotel-Datenverarbeitungsanlage oder einem eigenen Serverdienst stammen können. Für den Anwender wird außerdem eine grafische Benutzeroberfläche zur Verfügung gestellt. Sobald der Anwender auf dieser eine Dienstleistung ausgewählt hat, werden diese Daten an den entsprechenden dem Anwender zugeordneten Rechner 8 und an einen Systemcontroller 100 gesandt.

Der Systemcontroller 100 hat einerseits die Aufgabe, dem Anwender den Zugriff auf die grafische Benutzeroberfläche zu ermöglichen, wenn er auf seinem Anwenderendgerät 5 diese aufruft. Andererseits hat er die Aufgabe, die auf dem Medienserver 1 gespeicherten digitalen Medieninhalte abzurufen und an den jeweiligen Rechner 8, der dem Anwender zugeordnet ist, weiterzugeben, wenn der Anwender diese anfordert. Er hat außerdem die Aufgabe, den Videoausgang des Anwenderendgerätes auf einen freien Kanal zum Empfang von Audio- und/oder Videodaten zu schalten. Dabei fragt der Systemcontroller ständig Daten von dem Anwenderendgerät ab, um festzustellen, welche Dienstleistung von dem Anwender angefordert wird. Um mit den einzelnen Komponenten wie Rechner 8, Serversystem 91, Spielestationen 7 und Medienserver 1 kommunizieren zu können, ist der Systemcontroller mit allen Komponenten über Datenleitungen 61, 62, 63, 64, 65 verbunden. Um mit den einzelnen Anwenderendgeräten 5 in Verbindung treten zu können, werden die von dem Systemcontroller ausgesandten Daten über ein Antennenmodem 32 geführt, das die ausgesandten Daten entsprechend für die Antenne moduliert.

Der digitale Medienserver 1 ist mit einem Verwaltungssystem für seine digitalisierten Medieninhalte versehen, wodurch ein Einspielen und/oder Löschen von Medieninhalten auf dem Medienserver möglich ist.

Bestellt ein Anwender, z.B. ein Hotelgast, einen Film oder ein Spiel, teilt das Serversystem dies dem Systemcontroller mit, der daraufhin den Film bzw. das Spiel beim Medienserver 1 bzw. einer der Spielestationen 7 anfordert und starten läßt. Während eines Spiels werden die von dem Anwender beispielsweise durch einen Joystick abgegebenen Kommando-Daten durch den Systemcontroller von dem entsprechenden Anwenderendgerät abgefragt und jeweils an die Spielestation 7 weitergegeben.

Um die von den einzelnen multimedialen Komponenten des Systems ausgesandten Daten an die anderen Komponenten des Systems weitergeben zu können, sind an verschiedenen Stellen innerhalb der Datenleitungen Kreuzschienen 66 vorgesehen.

Die in Fig.1 gezeigte Konstellation des Systems stellt eine erste grundlegende Ausführungsform des Systems dar. Diese Konstellation ist als solches lauffähig und weist gegenüber den bekannten Systemen die vorstehend erläuterten Vorteile auf.

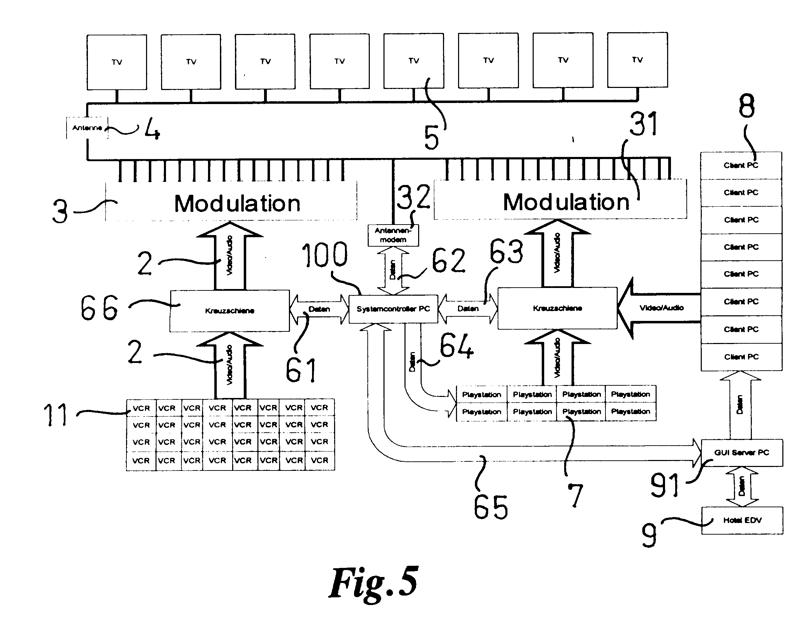

Ein solches bekanntes System ist in Fig.5 dargestellt. Dieses System ist anstelle des erfindungsgemäß vorgesehenen Medienservers mit einer Mehrzahl von einzelnen Videoabspielgeräten 11 versehen. Die Anzahl der darauf gleichzeitig abspielbaren Filme ist begrenzt. Außerdem ist bei laufendem Film lediglich ein Zuschalten, nicht jedoch das zeitgleiche Starten des Films für einen zweiten Anwender möglich. Aufgrund der Verwendung von Videokassetten können auf den Videoabspielgeräten jeweils nur diejenigen Filme gezeigt werden, für die eine solche Videokassette vorhanden ist. Es können also nicht beliebige Filme gegeneinander ausgetauscht werden, ohne daß die jeweiligen Kassetten selbst ausgetauscht werden. Üblicherweise werden die Videokassetten von der jeweiligen Betreiberfirma zur Verfügung gestellt, wobei diese die Filmauswahl trifft. Die bespielten Kassetten werden auf dem Postweg den einzelnen Systemnutzern, also beispielsweise Hotels, zugestellt, weswegen eine Anpassung der Filmauswahl an aktuelle Bedürfnisse mit relativ langen Vorlaufzeiten verbunden ist. Darüber hinaus sind die Videokassetten einem verhältnismäßig hohen Verschleiß ausgesetzt, so daß sie häufig ersetzt werden müssen, was ebenfalls jedesmal mit Kosten und Aufwand verbunden ist.

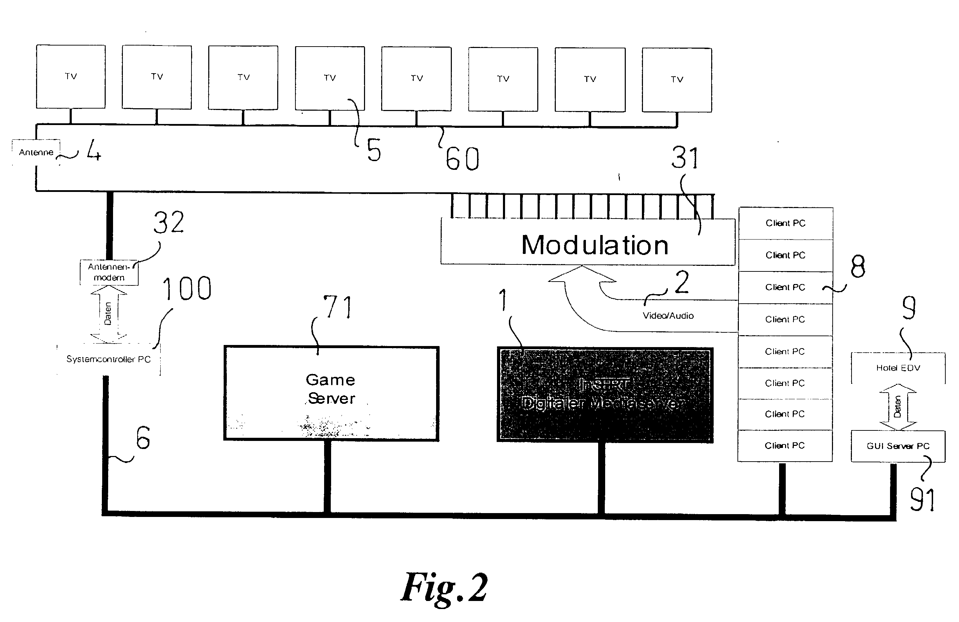

Eine gegenüber der in Fig.1 gezeigten Ausführungsform verbesserte zweite Ausführungsform ist in Fig.2 dargestellt. Diese Ausführungsform unterscheidet sich von der in Fig.1 gezeigten dadurch, daß die einzelnen Spielestationen 7 gegen einen digitalen Spieleserver 71 ausgetauscht sind. Dadurch können vorteilhaft mehr als ein Anwender dasselbe Spiel gleichzeitig an dem jeweiligen Anwenderendgerät oder TV-Gerät 5 spielen. Auch der Datentransport von und zu den einzelnen Komponenten des Systems ist erleichtert, da anstelle der zahlreichen Datenleitungen vom und zum Systemcontroller 100 ein Netzwerk 6 vorgesehen ist, um den Datentransfer zwischen den einzelnen Komponenten des Systems effektiver und schneller zu gestalten, wodurch insbesondere die Kreuzschienen 66 entfallen können.

Außerdem wird die interaktive Benutzeroberfläche nun von den einzelnen Rechnern 8 generiert, deren Aufgabe auch das Dekodieren der Videoinhalte von Spieleserver 71 und Medienserver 1 ist. Die Rechner 8 weisen darüber hinaus die Möglichkeit auf, interaktive Inhalte darzustellen, wie beispielsweise interaktive Elemente in TV-Programmen, um in deren Handlung oder Ablauf Eingriff nehmen zu können. Dadurch kann auch die Auswahl der aufzuzeichnenden Sendungen interaktiv durch den Anwender erfolgen.

Der Medienserver 1 ist mit einer Einrichtung zum Aussenden von breitbandigen Medieninhalten und zum Unterstützen von internationalen Standards versehen, wie beispielsweise Dekodierungsstandards, TV-Datenübertragungsstandards und Standards für die Integration von Web-Inhalten in Fernsehprogrammen, wobei er insbesondere die Fernsehinhalte selbst unterstützt. Außerdem ermöglicht es der Medienserver 1 den Rechnern 8, Zugriff auf bei ihm abgespeicherte Datenbanken zu nehmen, auf denen insbesondere Namen und Inhalt der gespeicherten Filme enthalten ist. Diese Datenbanken werden beispielsweise auch benötigt, um Internetaktionen realisieren zu können.

Der Medienserver 1 weist ebenfalls eine Einrichtung auf, um für verschiedene Anwender zeitgleich, unterschiedliche Sendungen aufzeichnen zu können. Dabei kann der Medienserver über Kabel oder Satelliten die Sendungen empfangen und Sendezeiten sowie deren Dauer abgleichen. Bei dem erfindungsgemäßen Medienserver kann eine maximale Verweildauer für die einzelnen aufgezeichneten Sendungen von der Betreiberfirma und/oder dem einzelnen Systemnutzer, also beispielsweise dem jeweiligen Hotel, eingestellt bzw. vorgegeben werden. Insbesondere kann eine Vorgabe gemacht werden, daß bei für den Anwender kostengünstigen Dienstleistungen bzw. für diesen gegen eine geringe Gebühr aufgezeichneten Sendungen diese nach kurzer Verweildauer auf dem Medienserver wieder gelöscht werden, wohingegen gegen eine hohe Gebühr aufgezeichnete Sendungen oder Dienstleistungen erst nach einer längeren Verweildauer auf dem Medienserver wieder gelöscht werden. Zu diesem Zweck werden den einzelnen Sendungen bzw. Medieninhalten, die sich auf dem Server befinden, Parameter zugeordnet, die nachfolgend abgefragt werden können.

Um ein Nutzerprofil und/oder Anwenderprofil erstellen zu können, wird z.B. insbesondere von dem Medienserver ein Profil der nachgefragten Sendungen und Dienstleistungen erstellt. Außerdem kann der einzelne Anwender, beispielsweise ein Hotelgast, beim Einchecken nach von ihm bevorzugten Medieninhalten befragt werden. Diese werden ebenfalls als Parameter dem Medienserver eingegeben, wobei dieser sie vorzugsweise in seiner Datenbank ablegt, wo sie für die weitere Datenverknüpfung zur Verfügung stehen. Insbesondere kann er dadurch nachfolgend selbständig diejenigen Sendungen für den Anwender aus dem angebotenen Programm aufzeichnen, die in dessen Anwenderprofil passen. Dabei können nicht nur Filme, sondern auch Musiksendungen aufgezeichnet werden. Insbesondere können semantische Netzwerke, Neuronale Netze oder die Methoden des Datamining dabei genutzt werden. Über die interaktive Benutzeroberfläche kann dann dem Anwender ein Hinweis auf die in nächster Zeit laufenden Sendungen durch den Medienserver gegeben und eine zu wählende Anzeige initialisiert werden, mittels derer die Sendungen von dem Anwender ausgewählt werden können, die er sehen oder aufzeichnen lassen möchte. Nach dem Auschecken des Anwenders kann der Medienserver dann diese Sendungen wieder von sich aus löschen, sofern er festgestellt hat, daß sie in kein anderes Anwenderprofil und nicht in das Nutzerprofil des Hotels als Systemnutzer passen.

In dieser Ausführungsform ist auch die Möglichkeit für den Anwender gegeben, wenn er während einer laufenden Sendung diese für kurze Zeit unterbrechen müßte, um einer anderen Beschäftigung nachzugehen, die Sendung aufzeichnen lassen und nach der kurzen Unterbrechung die Sendung weiterzuverfolgen von der Stelle an, an der er sie unterbrochen hat, während die Aufzeichnung der Sendung noch erfolgt.

Neben den von Sendern ausgestrahlten Filmen und Sendungen können auch Werbefilme oder Werbespots auf dem Medienserver gespeichert werden, die nachfolgend in die einzelnen Sendungen und Filme anwenderorientiert eingestreut werden können. Dies kann entweder der Medienserver selbständig aufgrund des eingegebenen Anwender- und/oder Nutzerprofils tun oder durch Vorgaben des Systemnutzers oder der Betreiberfirma des Systems. Dadurch ist es möglich, personalisierte Werbeeinspielungen vorzusehen. Es kann die Möglichkeit vorgesehen werden, daß einige Sendungen kostenlos, dafür mit einer großen Anzahl von Werbeeinspielungen, andere mit einer geringen Anzahl von Werbeeinspielungen und dafür gegen eine höhere Gebühr zur Verfügung gestellt werden. Die Wahl, ob eine Sendung kostenlos und mit zahlreichen Werbeeinspielungen oder gegen Zahlen einer Gebühr und dafür mit wenig oder keinen Werbeeinspielungen zu Verfügung gestellt wird, kann dem Anwender überlassen werden. Der Medienserver versieht in Abhängigkeit von der Wahl des Anwenders die Sendung selbständig individuell für den jeweiligen Anwender mit oder ohne Werbeeinspielungen. Außerdem kann eine Einrichtung vorgesehen werden, die dafür sorgt, daß die Werbeeinspielungen nicht durch den Anwender durch Vorspulen des Films oder der Sendung übersprungen werden können.

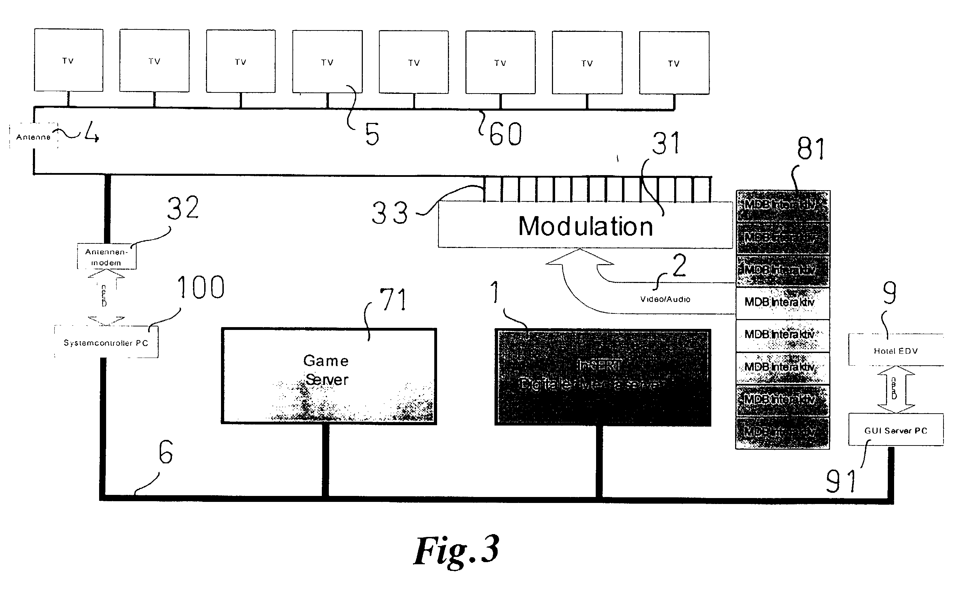

Fig.3 zeigt eine Prinzipskizze einer dritten Ausführungsform des erfindungsgemäßen Systems. In dieser sind die einzelnen Rechner 8 gegen interaktive Decoderbaugruppen 81 ersetzt. Diese Decoderbaugruppen 81 dienen dem Dekodieren von digitalen Audio- und/oder Videodaten, dem Weitergeben der dekodierten Daten an die Anwenderendgeräte und der Darstellung interaktiver Anwendungen auf den Anwenderendgeräten. Sie stellen daher für den Anwender die gleichen Möglichkeiten zur Verfügung wie die Rechner 8 allerdings in besserer Qualität, was insbesondere die Darstellung von Internetinhalten anbetrifft.

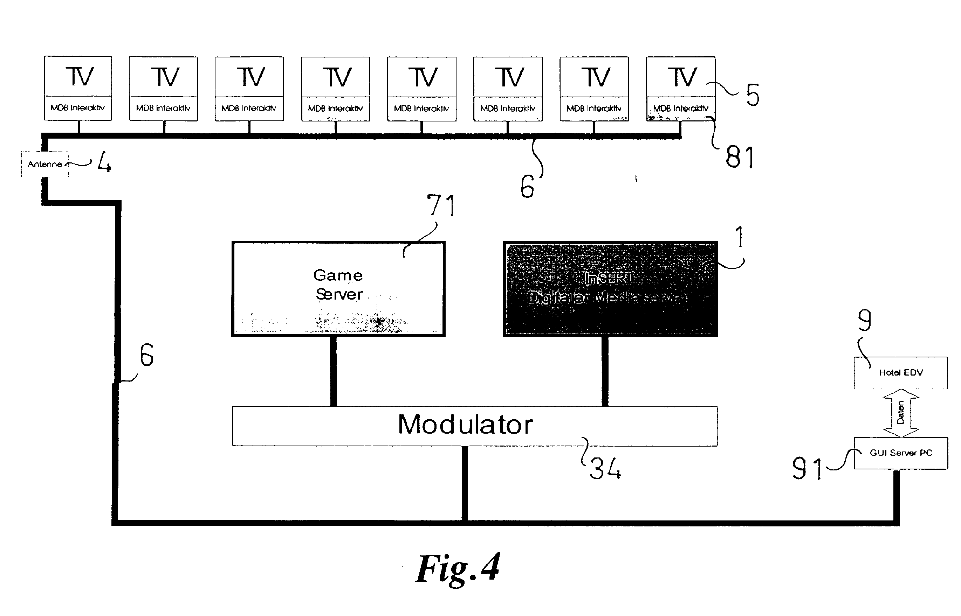

Bei der in der Prinzipskizze gemäß Fig.4 dargestellten vierten Ausführungsform des erfindungsgemäßen Systems sind die interaktiven Decoderbaugruppen 81 in die TV-Geräte 5 bei den einzelnen Anwendern integriert oder zumindest nahe diesen angeordnet. Dadurch kann der mit zahlreichen Ausgängen 33 versehene Modulator 31 (Fig.2, 3) zwischen den einzelnen interaktiven Decoderbaugruppen 81 entfallen. Es ist daher nur noch ein Modulator 34 für die von dem Medienserver 1 und/oder dem Spieleserver 71 ausgesandten und empfangenen Daten im Netzwerk 6 vorgesehen. Auch das Antennenmodem 32 kann dadurch entfallen, ebenso wie der Systemcontroller 100. Das Netzwerk 6 kann bis zu den Anwender- oder TV-Geräten 5 ausgedehnt werden. Es verbleiben also lediglich die Systemkomponenten Netzwerk 6, Medienserver 1, Spieleserver 71, die zusammen als Servereinrichtung bezeichnet werden können, Modulator 34, Kopfstelle 9 mit Serversystem 91, Antenne 4 sowie Anwenderendgeräte oder TV-Geräte 5 mit interaktiven Decoderbaugruppen 81. Das System weist daher in dieser Ausführungsform einen vorteilhaft geringen Umfang an Komponenten auf, die alle nur digitale Daten untereinander austauschen und daher schnell und effektiv im Zeitmultiplex arbeiten können.

Durch die Integration der Decoderbaugruppen 81 in die TV-Geräte 5 können alle durch das System bereitgestellten Dienstleistungen vorteilhaft anwenderfreundlich mittels einer Fernbedienung bedient werden. Die Decoderbaugruppe 81 kann als Steckkarte, Chip oder separate Zusatzeinrichtung in das TV-Gerät eingesteckt und/oder mit diesem verbunden werden, insbesondere auch optisch.

Darüber hinaus können weitere Einrichtungen vorgesehen werden, die es ermöglichen, über Satellitenkommunikation und/oder das Internet das System mit dem Betreiber so zu verbinden, daß dieser neue Medieninhalte auf den Medienserver aufspielen und diesen bei Bedarf beliebig umprogrammieren kann. Entweder werden dabei die einzelnen Systeme bei den jeweiligen Systemnutzern, z.B. Hotels, oder alle diese Systeme gemeinsam neu konfiguriert, sofern sie die gleichen Nutzerprofile aufweisen, und/oder mit neuen Audio- und/oder Videodaten, neuen grafischen Benutzeroberflächen etc. versorgt.

Das erfindungsgemäße System ist ein modulares System. Dies bedeutet, daß die einzelnen in den Figuren 1 bis 4 dargestellten Komponenten und Einrichtungen nacheinander in bestehende Systeme als Module implementiert werden können. In einer ersten Aufbauphase werden dabei vorzugsweise die analogen Videoabspielgeräte gemäß Fig.5 durch den digitalen Medienserver nach Fig.1 ersetzt. Dadurch werden die Audio- und/oder Videodaten durch den Medienserver in komprimierter Form ausgeliefert und eine interaktive Kontrolle der Daten möglich.

In einer zweiten Aufbauphase werden die Einrichtungen zum Dekodieren von digitalen Audio- und/oder Videodaten, zur Weitergabe der dekodierten Daten an die Anwenderendgeräte und zur Darstellung interaktiver Anwendungen auf den Anwenderendgeräten, nämlich die interaktiven Decoderbaugruppen integriert, wie in Fig.3 gezeigt. Diese unterstützen die Darstellung interaktiver Anwendungen, wie der Verarbeitung von Webseiten. Die Einrichtungen werden zum Ersatz für die einzelnen Rechner in das System integriert.

Eine dritte Aufbauphase enthält vorzugsweise die direkte Integration der Einrichtungen in die Anwenderendgeräte, wie in Fig.4 gezeigt. Hierdurch kann jeder Anwender direkt auf die Servereinheit zugreifen und interaktiv die von ihm gewünschten Dienstleistungen auswählen. Es treten für den Anwender keine störenden Wartezeiten mehr auf, da aufgrund der Verwendung digitalisierter Daten und Komponenten auch zahlreiche Anwender parallel die gleichen Dienstleistungen erhalten können. Dies führt auch dazu, daß eine sog. lokale Intelligenz bei den Anwenderendgeräten entsteht.

Außerdem kann eine insbesondere zentrale Einrichtung zum Verteilen digitalisierter Daten unter Nutzung von Satellitensystemen und/oder zum Kontrollieren der Servereinheit über das Internet in das System integriert werden, die in Fig.4 nicht gezeigt ist.

Anhand der Figuren 1 bis 5 ist direkt ersichtlich, daß die Komplexität des Systems aufgrund der fortschreitenden Integration von einer Phase zur nächsten immer stärker abnimmt und die Handhabbarkeit des Systems dadurch immer einfacher und effektiver wird.

Neben den in den Figuren 1 bis 4 gezeigten und zu diesen beschriebenen Ausführungsformen kann das erfindungsgemäße System noch beliebige andere Formen annehmen, sofern zumindest eine seiner Audio- und/oder Videodaten liefernde Komponenten digital arbeitet und das System einer Mehrzahl von Anwendern an verschiedenen Stellen an deren Anwenderendgeräten interaktiv die gewünschten Daten zur Verfügung stellt.

### Bezugszeichenliste

- 1: Medienserver
- 2: Audio- und/oder Videodaten
- 3: Modulator
- 4: Antenne
- 5: Anwenderendgerät, TV-Gerät
- 6: Netzwerk
- 7: Spielestation
- 8: Rechner
- 9: Kopfstelle
- 11: Videoabspielgerät
- 21: Daten
- 31: Modulator
- 32: Antennenmodem
- 33: Ausgänge
- 34: Modulator
- 60: Datenleitungsnetz
- 61: Datenleitung
- 62: Datenleitung
- 63: Datenleitung
- 64: Datenleitung
- 65: Datenleitung
- 66: Kreuzschiene
- 71: Spieleserver
- 81: interaktive Decoderbaugruppe
- 91: Serversystem
- 100: Systemcontroller

## Patentansprüche

1. System zum Bereitstellen von durch Anwender angeforderten Daten, insbesondere Audio- und/oder Videodaten (2), an einer Mehrzahl von Einzelstellen unter Nutzung multimedialer Komponenten, wobei eine Mehrzahl von Anwenderendgeräten (5) an den Einzelstellen, Mittel (3, 31, 32, 34) zum Modulieren von Daten, zumindest eine Kopfstelle (9) und Datenleitungen (61, 62, 63, 64, 65) bzw. ein Datenleitungsnetz (60), die einzelnen Komponenten des Systems miteinander verbindend, vorgesehen sind, **gekennzeichnet durch** zumindest eine Einrichtung (81) zum Dekodieren von digitalen Audio- und/oder Videodaten (2), die in eine digitale Servereinrichtung (1,71) und/oder die Anwenderendgeräte (5) integriert ist, wobei die digitale Servereinrichtung die digitalen Audio- und/oder Videodaten (2) liefert, bereitstellt und überträgt.

2. System nach Anspruch 1, **dadurch gekennzeichnet**, daß die Decodereinrichtung (81) zur Weitergabe der dekodierten Daten an die Anwenderendgeräte (5) und zur Darstellung interaktiver Anwendungen auf den Anwenderendgeräten vorgesehen ist.

3. System nach Anspruch 1 oder 2, **dadurch gekennzeichnet,** daß die digitale Servereinrichtung ein digitaler Medienserver (1) und/oder Spieleserver (71) ist, der die Audio- und/oder Videodaten an das oder die Mittel (3, 31, 34) zum Modulieren abgibt.

4. System nach Anspruch 1, 2 oder 3, **dadurch gekennzeichnet,** daß zumindest eine Komponente (1, 5, 8, 71, 81, 91) des Systems durch den Anwender interaktiv beeinflußbar ist.

5. System nach Anspruch 4, **dadurch gekennzeichnet,** daß die Einrichtung (81) interaktiv betätigbar ist.

6. System nach Anspruch 4 oder 5, **dadurch gekennzeichnet,** daß die Einrichtung (81) in die Anwenderendgeräte (5) integriert ist.

7. System nach einem der vorstehenden Ansprüche, **dadurch gekennzeich net,** daß der digitalen Servereinrichtung (1,71) ein daran angepaßtes Mittel (34) zum Modulieren der digitalen Daten zugeordnet ist.

8. System nach einem der vorstehenden Ansprüche, **dadurch gekennzeichnet,** daß eine Einrichtung zum Übermitteln digitalisierter Daten an das System unter Nutzung von Satellitensystemen und/oder eine Einrichtung zum Kontrollieren der Servereinrichtung über das Internet und/oder Satellitenkommunikation vorgesehen ist.

9. System nach einem der vorstehenden Ansprüche, **dadurch gekennzeichnet,** daß ein Netzwerk (6) zur Datenleitung vorgesehen ist, wobei Daten insbesondere Fernsehsignale und/oder Audio- und/oder Videosignale und/oder Signale von Zusatzdienstleistungen wie Informationssystemen sind.

10. System nach einem der vorstehenden Ansprüche, **dadurch gekennzeichnet,** daß der Medienserver (1) eine Einrichtung zum Speichern und Verknüpfen von Anwender- und/oder Nutzerprofilen aufweist, wobei die Einrichtung selbständig und/oder durch Betätigung Verknüpfungen von Anwender- und/oder Nutzerprofil und ausgestrahlten Medieninhalten oder anderweitige Daten vornimmt.

11. System nach einem der vorstehenden Ansprüche, **dadurch gekennzeichnet,** daß der Medienserver (1) eine Einrichtung zum insbesondere anwender- und/oder nutzerprofilorientierten Einstellen und insbesondere selbständigen Überwachen von Verweilzeiten von auf ihm gespeicherten Daten aufweist.

12. System nach einem der vorstehenden Ansprüche, **dadurch gekennzeichnet,** daß die digitale Servereinrichtung (1,71) und/oder eine zusätzliche Servereinheit oder ein Serversystem (91), die oder das mit der digitalen Servereinrichtung in Verbindung steht, von einer externen Datenquelle mit Daten versorgbar ist.

13. System nach einem der vorstehenden Ansprüche, **dadurch gekennzeichnet,** daß der Medienserver (1) eine Einrichtung zum gleichzeitigen Aufzeichnen und zeitversetzten Abspielen der Audio- und/oder Videodaten (2) enthält.

14. Verwendung des Systems nach einem der vorstehenden Ansprüche für Hotels, Appartementanlagen oder Kabelnetzwerke.

15. Verfahren zum Bereitstellen von Daten, insbesondere Audio- und/oder Videodaten (2) an einer Mehrzahl von Einzelstellen unter Verwendung des Systems nach einem der Ansprüche 1 bis 13, **dadurch gekennzeichnet,** daß die Daten, insbesondere Audio- und/oder Videodaten (2) als digitalisierte breitbandige Daten von der zumindest einen digital arbeitenden Komponente des Systems verwaltet und bereitgestellt werden.

16. Verfahren nach Anspruch 15, **dadurch gekennzeichnet**, daß das System vermittels eines eingegebenen Datenprofils, insbesondere Anwenderund/oder Nutzerprofil, selbständig über audiovisuelle Medien und/oder im Internet ausgestrahlte Audio- und/oder Videodaten (2) selektiert, aufzeichnet und zum insbesondere zeitversetzten Abspielen Anwendern an den Einzelstellen zur Verfügung stellt.

17. Verfahren nach einem der Ansprüche 15 oder 16, **dadurch gekennzeichnet,** daß die aufgezeichneten Audio- und/oder Videodaten (2) mit Daten von Werbeeinspielungen anwender- und/oder nutzerprofilorientiert kombiniert werden.

18. Verfahren nach einem der Ansprüche 15 bis 17, **dadurch gekennzeichnet,** daß die Audio- und/oder Videodaten (2) in komprimierter Form abgegeben werden.
